# EUROPEAN PATENT SPECIFICATION

(11) **EP 4 125 392 B1**
(45) Date of publication and mention of the grant of the patent: **13.03.2024**
(21) Application number: 21711277.0
(22) Date of filing: 16.03.2021
(51) Int. Cl.: A21D 10/02, A21D 13/10, A21D 13/41, B65D 85/36, A21D 13/11

(54) **PACKED DOUGH PRODUCT AND RELATED METHODS**
VERPACKTES TEIGPRODUKT UND ZUGEHÖRIGE VERFAHREN
PRODUIT DE PÂTE EMBALLÉ ET PROCÉDÉS ASSOCIÉS

(30) Priority: 27.03.2020 EP 20315069
(43) Date of publication of application: 08.02.2023
(73) Proprietor: Lesaffre et Compagnie, 75001 Paris (FR)
(72) Inventor: BILLIET, Charles-Edouard, 59116 Houplines (FR); BRYCKAERT, Emilie, 59118 Wambrechies (FR); MEILLIER, Stéphane, 59223 Roncq (FR); MUCHEMBLED, Jean-Jacques, 59700 Marcq-en-Baroeul (FR)
(74) Representative: Bandpay & Greuter
(86) International application number: PCT/EP2021/056598
(87) International publication number: WO 2021/190990

(56) References cited:
- WO-A1-2013/086090
- WO-A2-2004/113096
- FR-A1- 2 750 950
- US-A- 2 673 807
- Anonymous: "Dough It Yourself 2 Artisan Thin Crust Gluten Free Pizza Bases 400g: Amazon.co.uk: Grocery", , 19 July 2016 (2016-07-19), XP055709220, Retrieved from the Internet: URL:https://www.amazon.co.uk/Dough-Yoursel f-Artisan-Crust-Gluten/dp/B01IPKMWG6/ref=l p_6860799031_1_15_s_it?s=grocery&ie=UTF8&q id=1593166942&sr=1-15 [retrieved on 2020-06-26]

## Description

### TECHNICAL FIELD

The present invention belongs to the field of food processing and human nutrition. The present invention particularly relates to a packed dough product comprising ready-to-use, fresh dough pieces; a dough assembly comprising said packed dough product; a method for preparing them and a method for storing them. The packed dough product has a prolonged lifetime, without compromising the organoleptic properties of the dough pieces. The packed dough product is useful for example for preparing home-delivered dough-based foodstuff, particularly pizzas.

### TECHNICAL BACKGROUND

Dough-based foodstuff has become immensely popular over the past decades. For example, people frequently eat pizzas, as they are easy to bake, they have an appealable taste, and many different recipes are available.

The preparation of fresh dough, however, requires some attention, as its lifetime is limited to a couple of days at refrigeration temperature and its organoleptic properties deteriorate quickly. The organoleptic properties include textural properties, culinary properties, baking properties, viscoelastic properties, etc. The extemporaneous preparation of fresh dough is therefore cumbersome and time-consuming, particularly for businesses such as restaurants and delivery and carryout shops, where a very high number of dough pieces is needed every day.

Over the years, different solutions have been developed for facilitating the preparation and the storage of dough-based foodstuff.

For example, ready-to-bake dough-based foodstuff are sold at retail shops. The lifetime of such products varies depending on the type of preservation. For example, frozen ready-to-bake topped pizzas may be stored for weeks, or even months, at freezing temperature. In contrast, vacuum-packaged, fresh ready-to-bake topped pizzas may be stored only for a few days and usually are supplemented with food preservatives. However, these dough-based products do not always match the quality (taste, texture, crispiness, etc.) of pizzas prepared and baked upon demand. An example of a ready-to-bake dough-based foodstuff is "Dough It Yourself 2 Artisan Thin Crust Gluten Free Pizza Bases 400g: Amazon.co.uk: Grocery",, 19 July 2016 (2016-07-19), XP055709220, Retrieved from the Internet:URL:https://www.amazon.co.uk/Dough-Yourself-Artisan-Crust-Gluten/dp/B01IPKMWG6/ref=lp_6860799031_1_15_s_it? s=grocery&ie=UTF8&qid=1593166942&sr=1-15.

Hence, consumers are still keen on eating pizzas at restaurants or at ordering home-delivered pizzas. In order to meet the demand and to sell pizzas at reasonable prices, pizza makers, particularly at chain stores, often use ready-to-use, premade fresh dough pieces, which are prepared in advance and stored for a few days. For example, ready-to-use, premade fresh dough pieces may be prepared at a food processing facility, before being delivered and stored at the stores until use. Such dough pieces are usually not frozen. Hence, upon demand, the pizza maker just needs to top the dough and to bake the pizza. The same applies to other dough-based foodstuff such as bread and pastry.

Conventionally, a dough composition is prepared and cut into dough pieces of suitable size and weight, which are placed apart from each other, for example in a staggered arrangement, on stackable trays, directly at the food processing facility. Usually, a baking paper is placed on the tray, before placing the dough pieces. Several trays are delivered together to the stores, stacked on each other and stored at refrigeration temperature, until further use. Weekly deliveries are usual so as to facilitate logistics and avoid shortages in material in case of high demand. Hence, the dough pieces may be stored up to six days. Even though this practice allows having ready-to-use, fresh dough pieces, without needing to prepare them extemporaneously every day or to freeze them, there are several drawbacks. Firstly, a large refrigeration capacity is necessary for storing a high number of dough pieces for several days. Secondly, the organoleptic properties of the dough pieces deteriorate as time passes. As a consequence, the quality and the homogeneity of the dough-based foodstuff vary depending on the storage time. Thirdly, yeast fermentation may continue, and the dough pieces may keep expanding and/or spreading on the tray. Fourthly, the pizza maker may have difficulties working with dough pieces as they become soggy and sticky or alternatively hard and dry over time. They may also have an irregular shape. Hence, dough pieces are usually no longer acceptable after three days and/or they need to be worked by a skilled pizza maker. Fifthly, unused dough pieces should be thrown away after a few days. This generates unnecessary waste and loss of money.

There is therefore a need for providing ready-to-use, fresh dough pieces having a prolonged storage lifetime, without deteriorating their organoleptic properties. There is also the need for reducing the refrigeration storage capacity in stores. There is also the need for facilitating logistics by having longer intervals between two deliveries. There is also the need for limiting the quantity of dough pieces being thrown away, and the cost associated therewith.

### SUMMARY OF THE INVENTION

It is a first object of the invention to provide a packed dough product comprising at least two ready-to-use, fresh dough pieces, a mold having a top open end, and at least one barrier interface; wherein the dough pieces are stacked on top of each other within the mold and separated by barrier interfaces.

In one embodiment, the packed dough product comprises from two to five, preferably three or four, most preferably three, dough pieces per mold.

In one embodiment, the dough pieces are selected from the group consisting of pieces of bread dough, pizza dough, biscuit dough, cake dough, cookie dough, pastry dough or pasta dough; preferably from the group consisting of pieces of bread dough or pizza dough; more preferably wherein the dough pieces are pieces of pizza dough.

In one embodiment, the dough pieces are non-flattened and/or unfolded.

In one embodiment, the dough pieces have a substantially disk shape; a diameter from 10 to 25 cm, preferably from 10 to 20 cm, more preferably of about 14 cm; a thickness from 1 to 10 cm, preferably from 2 to 5 cm, more preferably of about 3 cm; and a weight from 100 to 500 g, preferably from 100 to 400 g, more preferably of about 300 g.

In one embodiment, the dough pieces are obtained from a dough composition comprising flour, a leavening living agent and water.

In one embodiment, the inner shape and dimensions of the mold are substantially identical to the overall shape and dimensions of the stacked dough pieces together.

In one embodiment, the mold has a substantially tubular shape.

In one embodiment, the mold has a substantially circular cross-section; an inner diameter from 10 to 25 cm, preferably from 10 to 20 cm, more preferably of about 14 cm; and a height from 2 to 30 cm, preferably from 5 to 20 cm, more preferably of about 10 cm.

In one embodiment, the material, from which the barrier interface is made, is selected from plastics, silicone or cooking papers; preferably wherein this material is a cooking paper.

In one embodiment, the packed dough product further comprises a (secondary) packaging; preferably a sealed packaging.

It is a second object of the invention to provide a dough assembly comprising: at least one tray; and, at least two, preferably from 2 to 16, more preferably from 6 to 10, packed dough products as defined herewith on the tray.

It is a third object of the invention to provide a method for preparing the packed dough product as defined herewith, comprising the steps of: providing a mold; providing a dough composition and preparing fresh dough pieces; placing a first dough piece into the mold; placing a barrier interface on top of the first dough piece; placing at least another dough piece on top of the barrier interface, and at least another barrier interface on top of it; cooling the dough pieces stacked in the mold to a temperature superior to 0 and up to 10 °C; and optionally wrapping the filled mold with a packaging.

It is a fourth object of the invention to provide a method for storing ready-to-use, fresh dough pieces, comprising the steps of: providing a packed dough product as defined herewith; and refrigerating the packed dough product.

It is a fifth object of the invention to provide a method for storing ready-to-use, fresh dough pieces as defined herewith, wherein the packed dough product is refrigerated at a temperature superior to 0 and up to 10 °C; preferably superior to 0 and up to 8 °C; more preferably superior to 0 and up to 4 °C.

In one embodiment, the packed dough product is stored up to 14 days.

In one embodiment, the packed dough product is not frozen below 0 °C.

The present invention makes it possible to address the needs of the prior art. In particular, the invention provides dough pieces having a prolonged lifetime, for example up to fourteen days, without any significant deterioration of their organoleptic properties i.e. their textural properties, culinary properties, baking properties and/or viscoelastic properties. The invention also allows sizing down the refrigeration storage capacity in stores or/and allows storing a higher number of dough pieces. Delivery and storage logistics are also simplified, in that delivery frequencies may be reduced, and packed dough products are handled more easily than with conventional trays.

The inventors have shown that, by stacking at least two, preferably three, dough pieces on top of each other, with interface barriers in-between, and fitting them within a mold, the dough pieces have a prolonged lifetime. Indeed, by comparison with dough pieces placed apart from each other on trays, stacked dough pieces according to the present invention keep satisfactory organoleptic properties for many days, for example up to fourteen days. Indeed, after several days of storage, the dough pieces do not show excessive sogginess, stickiness, hardness and/or dryness. In contrast, the dough pieces also show satisfactory strength and texture. Without wishing to be bound by theory, it is believed that stacking dough pieces within a mold limits the yeast fermentation and preserves organoleptic properties, thanks to the physical constraint exerted on one dough piece by the mold and the other dough pieces, together with a storage at refrigeration temperature.

### DESCRIPTION OF EMBODIMENTS

The invention will now be described in more detail without limitation in the following description.

### Packed dough product

In a first aspect, the present invention relates to a dough product comprising at least two ready-to-use, fresh dough pieces, a mold having a top open end, and at least one barrier interface; wherein the dough pieces are stacked on top of each other within the mold and separated by barrier interfaces. By "fresh dough pieces" is meant that the dough pieces are not frozen.

By "packed dough product" is meant a kit comprising at least two ready-to-use, fresh dough pieces, a mold and at least one barrier interface, wherein the dough pieces are stacked on top of each other within the mold and separated by barrier interfaces. The expressions "packed dough product", "dough product", "packed dough kit" and "dough kit" are used interchangeably. Such product/kit allows providing dough pieces, of which the delivery, the storage and the handling are facilitated, and the organoleptic properties are not compromised.

### Dough pieces

The dough pieces are pre-made, raw dough pieces, which are storage-stable pieces.

Preferably, the dough pieces are not flattened/spread and/or not folded prior being staked on top of each other in the mold. The dough pieces are thus non-flattened and/or unfolded, pre-made, raw dough pieces.

The dough pieces are ready-to-use i.e. ready to be baked. The dough pieces are fresh i.e. unbaked. Prior baking, the dough pieces may be prepared *e.g*. flattened/spread, filled and/or topped with any suitable garnish.

The dough pieces may be any dough pieces suitable for preparing dough-based foodstuff.

The dough pieces may be selected from the group consisting of pieces of bread dough, pizza dough, biscuit dough, cake dough, cookie dough, pastry dough or pasta dough; preferably from the group consisting of pieces of bread dough or pizza dough; more preferably the dough pieces are pieces of pizza dough.

### Dough composition

The dough product may be obtained from any suitable dough composition. The dough composition may be prepared by mixing flour, a leavening living agent and water. The dough may also comprise any suitable additional compounds. Suitable additional compounds may be selected from the group consisting of humecting agents, fatty compounds, sweetening agents, flavoring agents, improvers, deactivated yeast, or their mixtures. The proportions of the compounds are conventionally given per total weigh of the flour, also known as Baker's percentage.

The dough composition comprises any suitable flour, preferably wheat flour. For example, the flour may be from different grades, such as weak flour, medium strength flour and strong flour; preferably strong flour. By "strong flour" is meant a flour comprising a high protein content e.g. of about 14 % by total weight of the flour. By "medium strength flour" is meant a flour comprising an intermediate protein content e.g. of about 10 % by total weight of the flour. By "weak flour" is meant a flour comprising a low protein content e.g. of about 8 % by total weight of the flour.

The dough composition comprises any suitable leavening living agent; preferably a leavening living agent being a living yeast. The dough composition may comprise from 0.1 to 5 %, preferably from 0.3 to 2 %, of leavening living agent, per weight of the flour.

The dough composition may comprise a humecting agent. The humectant agent may be selected from the group consisting in sodium chloride (salt) or its substitutes. The humectant agent helps binding water to the dough composition. The dough composition may comprise from 0.1 to 5 %, preferably from 1.5 to 2.5 %, of humectant, per weight of the flour.

The dough composition may comprise a fatty compound. Fatty compounds may be selected from the group consisting of fatty compounds from animal origin, vegetal fatty compounds or any suitable substitutes. The dough composition may comprise from 0.1 to 10 %, preferably from 0.5 to 3 %, of fatty compound, per weight of the flour.

The dough composition may comprise any suitable additional compounds such as improvers, deactivated yeasts (dead), etc. The dough composition may comprise an additional compound selected from the group consisting of glucono-delta-lactone (E475), diacetyl tartaric acid ester of mono- and diglycerides or DATEM (E472e), glucose oxidase (E1102) or mixtures thereof. In one embodiment, the dough composition is free of malted wheat flour.

### Leavening living agent

The dough composition may comprise only one strain of yeast or a mixture of at least two strains of yeast. The yeast may be selected from the group consisting of the genera *Saccharomyces, Pichia, Candida, Kluyveromyces, Yarrowia* and/or *Wickehomomyces;* preferably from the group consisting of the species *Saccharomyces cerevisiae, Pichia jadinii, Kluyveromyces marxianus.* More preferably, the yeast is *Saccharomyces cerevisiae spp.* particularly baker's yeast.

In a specific embodiment, the dough composition comprises a cold-sensitive yeast. By "cold-sensitive yeast" is meant a yeast having for example a reduced fermentation performance at a positive cold temperature i.e. at a temperature superior to 0 °C and up to 10 °C, preferably from 4 to 10 °C.Suitable cold-sensitive yeasts are disclosed for example in the PCT application WO 97/28693 A1 filed on February 7th, 1997 in the name of Lesaffre et Cie.

Suitable cold-sensitive yeasts may be yeasts giving at least 100 ml of CO₂ in two hours at 30 °C in the test A₁ according to WO 97/28693 A1, preferably at least 110 ml of CO₂, still preferably at least 150 ml CO₂ ; corresponding to the following ratio [release of CO₂ in 48 hours at 8 °C in test A₁ / release of CO₂ in 2 hours at 30 °C in test A₁] lower than 0.45, preferably lower than 0.40 and still preferably lower than 0.30; it being understood that according to test A₁, there is added to 20 g of flower incubated at the temperature selected for the measure a weight of compressed yeast corresponding to 160 mg of dry matter, the said yeast being diluted in 15 ml of water containing 27 g of NaCl per litre and 4 g of (NH₄)₂SO₄ per litre; this is mixed with a spatula during 40 seconds in order to obtain a dough which is put in a water-bath or bain-marie regulated at the selected temperature ; thirteen minutes after the start of the mixing, the vessel containing the dough is hermetically closed; the total amount of gas which is produced is measured after 60, then 120 minutes or several hours; that quantity being expressed in ml at 20°C and under 760 mm of Hg. Suitable cold-sensitive yeasts are commercially available under the tradenames T.CONTROL^{™} 4.10 from Lesaffre or LT3 from Oriental Yeast (OYC).

The dough composition may also comprise a conventional baker's yeast.

In a preferred embodiment, the dough composition comprises a mixture of a cold-sensitive yeast and a conventional baker's yeast. The cold-sensitive yeast and the conventional baker's yeast may be present in a respective ratio from 1:10 to 10:1, preferably from 1:5 to 5:1, more preferably from 1:2 to 2:1, for example about 1:1. The inventors have shown that providing dough compositions comprising such mixture of yeasts is particularly suitable for providing dough pieces having a prolonged lifetime, for example up to fourteen days, without any significant deterioration of their organoleptic properties. Indeed, such dough compositions show a satisfactory balanced fermentation profile both at positive cold temperature - by helping to limit excessive unwanted growth and retaining a regular shape, particularly with the incorporation of cold-sensitive yeasts - and at ambient temperature - by satisfactorily fermenting the dough, particularly by incorporating conventional baker's yeast.

### Method for preparing the dough

The method for preparing the dough may comprise the steps of:
- providing a dough composition comprising at least flour, a leavening living agent and water;
- kneading and/or sheeting the mixture for obtaining a homogenous dough;
- optionally cutting the homogenous dough for obtaining dough pieces of suitable size and weight;
- forming a ball with the dough pieces; and
- letting the dough rest for obtaining a raised dough e.g. by yeast fermentation;
- optionally covering the raised dough with flour and/or semolina; and
- optionally refrigerating the raised dough to reduce its temperature e.g. to 4 °C.

The resting step may be carried out at a temperature of about 25 °C for 1 hour.

The refrigerating step may be carried out at a temperature of about 0 °C for 1 hour to reduce the temperature of the dough pieces to 4°C.

After preparing the dough pieces, they may be shaped in order to obtain a substantially disk shape i.e. a circular (round) flat shape. They may have a diameter from 10 to 25 cm, preferably from 10 to 20 cm, more preferably of about 14 cm. They may have a thickness from 1 to 10 cm, preferably from 2 to 5 cm, more preferably of about 3 cm. They may have a weight from 100 to 500 g, preferably from 200 to 400 g, more preferably of about 300 g.

### Mold

The mold is designed for fitting stacked dough pieces, preferably for tightly fitting stacked dough pieces. Particularly, the mold may comprise from two to five, preferably three or four, most preferably three, dough pieces, which are stacked on top of each other.

By "mold" is meant a packaging physically constraining the stacked dough pieces. A mold therefore differs from a flexible packaging, which is merely used for protecting and storing the dough pieces, however without physically constraining them.

The inventors have shown that, by stacking at least two dough pieces on top of each other within a mold, the dough pieces have a prolonged lifetime, without compromising their organoleptic properties. Indeed, by using a mold as a packaging (first packaging) and by stacking the dough pieces on top of each other within it, the dough pieces are physically constrained both by the mold and the other dough pieces. Stacking and molding the dough pieces slow down the yeast fermentation and limit, or even prevent, the expansion of the dough pieces. They also limit, or even prevent, the dough pieces becoming soggy and sticky and/or having irregular shapes.

In a preferred embodiment, the inner shape and dimensions (e.g. cross-sectional shape, diameter, height and volume) of the mold are substantially identical to the overall shape and dimensions of the stacked dough pieces together.

In a preferred embodiment, the stacked dough pieces are substantially identical in composition, shape, diameter, thickness, volume and weight.

When the dough pieces are stacked on top of each other within the mold, they substantially occupy at least 85 %, preferably at least 90 %, more preferably at least 95 %, most preferably about 100 %, of the inner volume of the mold.

The mold has a wall having a substantially tubular shape.

The mold may have any suitable cross-sectional shape *e.g*. a cross-sectional shape which is circular, oval, square or rectangular. In a preferred embodiment, the mold has a substantially circular cross-section.

The mold may have an inner diameter from 10 to 25 cm, preferably from 10 to 20 cm, more preferably of about 14 cm. The inner diameter of the mold may be substantially equal to the diameter of the dough pieces, after the resting and the cooling steps.

The mold may have a height from 2 to 30 cm, preferably from 5 to 20 cm, more preferably of about 10 cm. The height of the mold may be substantially equal to the total thickness of the stacked dough pieces, after the resting and the cooling steps.

The mold has an open top end, from which the dough pieces are introduced into the mold. In one embodiment, the mold may be closed with a removable lid, particularly for the sake of hygiene and/or for avoiding any contamination upon handling.

The mold may have a closed, flat bottom end. The closed, flat bottom end may be attached permanently or removably to the wall of the mold. Molds having a closed, flat bottom end may be handled easily. In addition, using a removable bottom end has the advantage of simplifying the removal of the stacked dough pieces, without needing to put the mold upside down.

Alternatively, the mold may have an open bottom end. In this embodiment, upon use, the mold may rest on a flat surface *e.g*. on a flat tray or a cardboard box. Using a mold without a bottom end has the advantage of facilitating the removal of the stacked dough pieces merely by lifting the mold.

The wall of the mold may be a fixed tubular wall, or alternatively may be a wall elastically constrained into a tubular shape by suitable means *e.g*. at least one adjustable latch or buckle.

The mold may be made of any suitable food-contact materials, particularly rigid food-contact materials. The material, from which the mold is made, may be selected from the group consisting of plastics, metal, ceramic, paper or cardboard; preferably the material may be a paper or cardboard. In one embodiment, the mold is made of a sustainable material, which can be reused or recycled afterwards.

The mold may be designed for preventing the dough pieces from sticking to the mold, *e.g.* by using non-stick materials and/or by coating the mold with a non-stick surface and/or by applying a non-stick substance prior stacking the dough pieces.

The mold is not a closed container such as a can.

The mold may be a reusable mold or alternatively it may be a mold for single use.

### Barrier interface

The stacked dough pieces are separated by the barrier interface. The barrier interface may be made of any suitable food-contact materials. The material, from which the barrier interface is made, may be selected from plastics, silicone (*e.g*. Silpâte ^{®}) or cooking papers; preferably the material is a cooking paper. In one embodiment, the barrier interface is made of a sustainable material, which can be reused or recycled afterwards.

Before placing the first dough piece, a barrier interface may be placed on the bottom end of the mold or on the tray onto which the mold rests.

After placing the last dough piece, a barrier interface may be placed on top of it.

The barrier interface may have a diameter from 2 to 30 cm, preferably from 5 to 20 cm, more preferably of about 14 cm. The diameter of the barrier interface is substantially identical to the diameter of the dough pieces, after the resting and the cooling steps.

### Packaging

The dough product may further comprise a (secondary) packaging, preferably a flexible packaging.

The packaging may be made of any suitable food-contact materials, particularly soft food-contact materials. The material may be a plastic material or a cardboard box with an inner plastic cover.

The packaging may be a sealed packaging. The packaging may be airtight and/or waterproof.

The packaging may be chosen from envelops or pouches. Such type of packaging does not physically constraint the dough pieces, contrary to the mold.

### Dough assembly

In a second aspect, the dough assembly comprises at least one tray; and at least two packed dough products on the tray.

The tray may be a tray conventionally used in baking. Suitable trays are for example trays made of plastics, having a length of about 60 cm, a width of about 40 cm, and a height of about 8 cm or about 15 cm.

The trays may be stackable, to ease their transportation and/or their storage.

Depending on the size of the dough products and the trays, each tray may comprise from 2 to 16, preferably from 6 to 10, more preferably about 8, dough products. The dough products may be placed in any suitable arrangement, e.g. in staggered arrangement, for maximizing the tray surface.

As each dough product comprises at least two dough pieces, the amount of dough pieces per tray is at least doubled relative to the prior art. In addition, as the dough pieces are fitted within a mold, there is no risk that the dough pieces spread on the tray surface, get into contact with and get stuck to neighboring dough pieces. Hence, dough products may be placed closer to each other (and even in contact with each other) in comparison with dough pieces directly placed on the tray surface. This helps further optimize the use of the tray surface area.

The dough products may be placed on the tray at the food processing facility or alternatively at a store. Particularly, when the mold has a closed bottom end, it may be easier to deliver and store the dough products as such, and to place them on the tray just before use. Alternatively, when the mold has no bottom end, empty molds may be placed on the tray and then filled with stacked dough pieces at the food processing facility, before being delivered altogether to the store.

### Method for preparing the dough product

In a third aspect, a method for preparing the packed dough product is provided.

This method comprises the steps of:
- providing a mold as defined herewith;
- providing a dough composition and preparing fresh dough pieces;
- optionally placing a barrier interface at the bottom of the mold;
- placing a first dough piece into the mold;
- placing a barrier interface on top of the first dough piece;
- placing at least another dough piece on top of the barrier interface and then at least another barrier interface on top of it;
- cooling the dough pieces stacked in the mold to a temperature superior to 0 and up to 10 °C; and,
- optionally wrapping the filled mold with a (secondary) packaging.

This method does not comprise a freezing step of the dough pieces.

The size and shape of the dough pieces fit the size and shape of the mold. In particularly, the size of the mold (*i.e.* diameter and height) fits the size of the dough pieces (*i.e.* number of dough pieces, diameter and thickness), after the resting and cooling steps.

After placing the dough pieces within the mold, the stacked dough pieces may substantially fill the entire volume of the mold, hence limiting the quantity of air still present. The tight fitting of the dough pieces within the mold limits, or even prevents, yeast fermentation upon storage.

### Method for storing ready-to-use, fresh dough pieces

In a fourth aspect, a method for storing ready-to-use, fresh dough pieces is provided.

This method comprises the steps of:
- providing a packed dough product as described herewith;
- refrigerating the dough product.

The dough product may be refrigerated at a temperature superior to 0 and up to 10 °C; preferably superior to 0 and up to 8 °C; more preferably superior to 0 and up to 4 °C. At this temperature, the yeast becomes mostly inactive, hence limiting the fermentation of the dough piece upon storage. In contrast, the dough product is not frozen below about 0 °C.

The dough product may be stored up to 14 days. The present invention therefore allows prolonging the storage lifetime at least three times more than the conventional technique consisting in placing fresh dough pieces apart from each other directly on trays.

### Method for using the packed dough products

The dough products according to the present invention may be used as follows. One of the stacked dough pieces may be removed from the mold and placed on a flat surface. The dough piece may be sheeted to the suitable shape, diameter and thickness. If the dough is used for preparing a pizza, it may be topped with any garnish and then be baked at a suitable temperature and for a suitable period of time. Meanwhile the dough product may be stored again at refrigeration temperature or may be left at ambient temperature if the other stacked dough pieces are to be used within minutes.

### EXAMPLES

The following example illustrates the invention without limiting it.

A dough composition is prepared about 55 % water à 8 °C, about 2.0 % of oil, about 1.5 % of salt, about 1.0 % of improver, about 0.1 % of deactivated yeast, about 0.3 % of a cold-sensitive yeast (T.CONTROL^{™} 4.10) and about 0.3 % of a conventional baker's yeast (SPI1), by weight of the flour (100 %).

The dough composition is kneaded for 10 min to obtain a homogenous dough, then divided into dough pieces of about 300 g. The dough pieces are ballshaped and let for resting at a temperature of about 18 °C for 15 min. The dough pieces are shaped again to obtain flat pieces having a diameter of about 13-14 cm, and a thickness of about 3 cm. Raised dough pieces are then refrigerating at 0 °C in order to reduce their temperature to about 4 °C.

A mold having an inner diameter of 14 cm and a height of about 10 cm is provided. A first dough piece is placed within the mold, before placing a barrier interface on top of the first dough piece. The same steps are carried out for the other dough pieces. A dough product comprising 3 stacked dough pieces is obtained.

The dough product is stored at 4 °C for 14 days, before using the dough pieces for preparing pizzas.

## Claims

1. A packed dough product comprising at least two ready-to-use, fresh dough pieces, a mold having a top open end, and at least one barrier interface;
wherein the dough pieces are stacked on top of each other within the mold and separated by barrier interfaces.

2. The packed dough product according to claim 1, comprising from two to five, preferably three or four, most preferably three, dough pieces per mold.

3. The packed dough product according to any one of the preceding claims, wherein the dough pieces are selected from the group consisting of pieces of bread dough, pizza dough, biscuit dough, cake dough, cookie dough, pastry dough or pasta dough; preferably from the group consisting of pieces of bread dough or pizza dough; more preferably wherein the dough pieces are pieces of pizza dough.

4. The packed dough product according to any one of the preceding claims, wherein the dough pieces are non-flattened and/or unfolded.

5. The packed dough product according to any one of the preceding claims, wherein the dough pieces have a substantially disk shape; a diameter from 10 to 25 cm, preferably from 10 to 20 cm, more preferably of about 14 cm; a thickness from 1 to 10 cm, preferably from 2 to 5 cm, more preferably of about 3 cm; and a weight from 100 to 500 g, preferably from 100 to 400 g, more preferably of about 300 g.

6. The packed dough product according to any one of the preceding claims, wherein the dough pieces are obtained from a dough composition comprising flour, a leavening living agent and water.

7. The packed dough product according to any one of the preceding claims, wherein the inner shape and dimensions of the mold are substantially identical to the overall shape and dimensions of the stacked dough pieces together.

8. The packed dough product according to any one of the preceding claims, wherein the mold has a substantially tubular shape.

9. The packed dough product according to any one of the preceding claims, wherein the mold has a substantially circular cross-section; an inner diameter from 10 to 25 cm, preferably from 10 to 20 cm, more preferably of about 14 cm; and a height from 2 to 30 cm, preferably from 5 to 20 cm, more preferably of about 10 cm.

10. The packed dough product according to any one of the preceding claims, wherein the material, from which the barrier interface is made, is selected from plastics, silicone or cooking papers; preferably wherein this material is a cooking paper.

11. The packed dough product according to any one of the preceding claims, further comprising a packaging; preferably a sealed packaging.

12. A dough assembly comprising:
- at least one tray; and,
- at least two, preferably from 2 to 16, more preferably from 6 to 10, packed dough products according to any one of the preceding claims 1 to 11 on the tray.

13. A method for preparing the packed dough product according to any one of the claims 1 to 11, comprising the steps of:
- providing a mold;
- providing a dough composition and preparing fresh dough pieces;
- placing a first dough piece into the mold;
- placing a barrier interface on top of the first dough piece;
- placing at least another dough piece on top of the barrier interface, and at least another barrier interface on top of it;
- cooling the dough pieces stacked in the mold to a temperature superior to 0 and up to 10 °C; and
- optionally wrapping the filled mold with a packaging.

14. A method for storing ready-to-use, fresh dough pieces, comprising the steps of:
- providing a packed dough product according to any one of claims 1 to 11; and
- refrigerating the packed dough product, preferably at a temperature superior to 0 and up to 10 °C; more preferably superior to 0 and up to 8 °C; most preferably superior to 0 and up to 4 °C; and
- optionally storing the packed dough product up to 14 days.

15. The method for storing ready-to-use, fresh dough pieces according to claim 14, wherein the packed dough product is not frozen below 0 °C.

## Patentansprüche

1. Verpacktes Teigprodukt, umfassend mindestens zwei gebrauchsfertige, frische Teigstücke, eine Form mit einem oberen offenen Ende und mindestens eine Barriereschnittstelle,
wobei die Teigstücke innerhalb der Form und durch Barriereschnittstellen getrennt aufeinander gestapelt sind.

2. Verpacktes Teigprodukt nach Anspruch 1, umfassend von zwei bis fünf, vorzugsweise drei oder vier, am meisten bevorzugt drei Teigstücke pro Form.

3. Verpacktes Teigprodukt nach einem der vorhergehenden Ansprüche, wobei die Teigstücke ausgewählt sind aus der Gruppe, bestehend aus Stücken von Brotteig, Pizzateig, Biskuitteig, Kuchenteig, Keksteig, Gebäckteig oder Nudelteig; vorzugsweise aus der Gruppe, bestehend aus Stücken von Brotteig oder Pizzateig; insbesondere wobei die Teigstücke Stücke von Pizzateig sind.

4. Verpacktes Teigprodukt nach einem der vorhergehenden Ansprüche, wobei die Teigstücke nicht abgeflacht und/oder entfaltet sind.

5. Verpacktes Teigprodukt nach einem der vorhergehenden Ansprüche, wobei die Teigstücke im Wesentlichen eine Scheibenform aufweisen; einen Durchmesser von 10 bis 25 cm, vorzugsweise von 10 bis 20 cm, insbesondere von ungefähr 14 cm; eine Dicke von 1 bis 10 cm, vorzugsweise von 2 bis 5 cm, insbesondere von ungefähr 3 cm; und ein Gewicht von 100 bis 500 g, vorzugsweise von 100 bis 400 g, insbesondere von ungefähr 300 g.

6. Verpacktes Teigprodukt nach einem der vorhergehenden Ansprüche, wobei die Teigstücke aus einer Teigzusammensetzung, umfassend Mehl, ein lebendes Gärmittel und Wasser, stammt.

7. Verpacktes Teigprodukt nach einem der vorhergehenden Ansprüche, wobei die innere(n) Gestalt und Abmessungen der Form im Wesentlichen identisch mit der/den allgemeinen Gestalt und Abmessungen der gestapelten Teigstücke zusammen sind.

8. Verpacktes Teigprodukt nach einem der vorhergehenden Ansprüche, wobei die Form eine im Wesentlichen rohrförmige Gestalt aufweist.

9. Verpacktes Teigprodukt nach einem der vorhergehenden Ansprüche, wobei die Form einen im Wesentlichen kreisförmigen Querschnitt aufweist, einen Innendurchmesser von 10 bis 25 cm, vorzugsweise von 10 bis 20 cm, insbesondere von ungefähr 14 cm; und eine Höhe von 2 bis 30 cm, vorzugsweise von 5 bis 20 cm, insbesondere von ungefähr 10 cm.

10. Verpacktes Teigprodukt nach einem der vorhergehenden Ansprüche, wobei das Material, aus dem die Barriereschnittstelle hergestellt ist, ausgewählt ist aus Kunststoff, Silikon oder Backpapieren, vorzugsweise wobei dieses Material ein Backpapier ist.

11. Verpacktes Teigprodukt nach einem der vorhergehenden Ansprüche, weiter umfassend: eine Verpackung; vorzugsweise eine versiegelte Verpackung.

12. Teigeinheit, umfassend:
- mindestens ein Tablett; und
- mindestens zwei, vorzugsweise 2 bis 16, insbesondere 6 bis 10 verpackte Teigprodukte nach einem der vorhergehenden Ansprüche 1 bis 11 auf dem Tablett.

13. Verfahren zum Zubereiten des verpackten Teigprodukts nach einem der Ansprüche 1 bis 11, umfassend die folgenden Schritte:
- Bereitstellen einer Form;
- Bereitstellen einer Teigzusammensetzung und Zubereiten von frischen Teigstücken;
- Platzieren eines ersten Teigstücks in die Form;
- Platzieren einer Barriereschnittstelle auf die obere Seite des ersten Teigstücks;
- Platzieren mindestens eines weiteren Teigstücks auf die obere Seite der Barriereschnittstelle und mindestens einer weiteren Barriereschnittstelle auf die obere Seite davon;
- Abkühlen der Teigstücke, die in der Form gestapelt sind, auf eine Temperatur von mehr als 0 und bis zu 10 °C; und
- optional Einwickeln der gefüllten Form mit einer Verpackung.

14. Verfahren zum Speichern von gebrauchsfertigen, frischen Teigstücken, umfassend die folgenden Schritte:
- Bereitstellen eines verpackten Teigprodukts nach einem der Ansprüche 1 bis 11, und
- Kühlen des verpackten Teigprodukts, vorzugsweise bei einer Temperatur von mehr als 0 und bis zu 10 °C; insbesondere mehr als 0 und bis zu 8 °C; am meisten bevorzugt mehr als 0 und bis zu 4 °C; und
- optional Speichern des verpackten Teigprodukts bis zu 14 Tagen.

15. Verfahren zur Speicherung von gebrauchsfertigen, fischen Teigstücken nach Anspruch 14, wobei das verpackte Teigprodukt nicht unter 0 °C gefroren wird.

## Revendications

1. Produit de pâte emballé comprenant aux moins deux pâtons frais prêts à l'emploi, un moule ayant une extrémité supérieure ouverte et au moins une interface barrière ;
dans lequel les pâtons sont empilés les uns au-dessus des autres à l'intérieur du moule et séparés par des interfaces barrières.

2. Produit de pâte emballé selon la revendication 1, comprenant de deux à cinq, de préférence trois ou quatre, de manière préférée entre toutes, trois pâtons par moule.

3. Produit de pâte emballé selon l'une quelconque des revendications précédentes, dans lequel les pâtons sont choisis dans le groupe consistant en des pâtons de pâte à pain, de pâte à pizza, de pâte à biscuits, de pâte à gâteau, de pâte à cookies, de pâte à tarte ou de pâte à pâtes ; de préférence dans le groupe consistant en pâtons de pâte à pain ou de pâte à pizza ; plus préférablement dans lequel les pâtons sont des pâtons de pâte à pizza.

4. Produit de pâte emballé selon l'une quelconque des revendications précédentes, dans lequel les pâtons sont non-aplatis et/ou dépliés.

5. Produit de pâte emballé selon l'une quelconque des revendications précédentes, dans lequel les pâtons ont une forme sensiblement discoïde ; un diamètre de 10 à 25 cm, de préférence de 10 à 20 cm, plus préférablement d'environ 14 cm ; une épaisseur de 1 à 10 cm, de préférence de 2 à 5 cm, plus préférablement d'environ 3 cm ; et un poids de 100 à 500 g, de préférence de 100 à 400 g, plus préférablement d'environ 300 g.

6. Produit de pâte emballé selon l'une quelconque des revendications précédentes, dans lequel les pâtons sont obtenus à partir d'une composition de pâte comprenant de la farine, un agent levant vivant et de l'eau.

7. Produit de pâte emballé selon l'une quelconque des revendications précédentes, dans lequel la forme et les dimensions internes du moule sont sensiblement identiques à la forme et aux dimensions globales de l'ensemble des pâtons empilés.

8. Produit de pâte emballé selon l'une quelconque des revendications précédentes, dans lequel le moule a une forme sensiblement tubulaire.

9. Produit de pâte emballé selon l'une quelconque des revendications précédentes, dans lequel le moule a une section transversale sensiblement circulaire ; un diamètre interne de 10 à 25 cm, de préférence de 10 à 20 cm, plus préférablement d'environ 14 cm ; et une hauteur de 2 à 30 cm, de préférence de 5 à 20 cm, plus préférablement d'environ 10 cm.

10. Produit de pâte emballé selon l'une quelconque des revendications précédentes, dans lequel le matériau, à partir duquel l'interface barrière est fabriquée, est choisi parmi plastique, silicone ou papiers de cuisson ; de préférence dans lequel ce matériau est un papier de cuisson.

11. Produit de pâte emballé selon l'une quelconque des revendications précédentes, comprenant en outre un emballage ; de préférence un emballage scellé.

12. Ensemble à pâte comprenant :
- au moins un plateau ; et
- au moins deux, de préférence de 2 à 16, plus préférablement de 6 à 10, produits de pâte emballés selon l'une quelconque des revendications 1 à 11 précédentes sur le plateau.

13. Procédé de préparation du produit de pâte emballé selon l'une quelconque des revendications 1 à 11, comprenant les étapes de :
- fourniture d'un moule ;
- fourniture d'une composition de pâte et préparation de pâtons frais ;
- placement d'un premier pâton dans le moule ;
- placement d'une interface barrière au-dessus du premier pâton ;
- placement d'au moins un autre pâton au-dessus de l'interface barrière et d'au moins une autre interface barrière au-dessus de celui-ci ;
- refroidissement des pâtons empilés dans le moule à une température supérieure à 0 et pouvant aller jusqu'à 10 °C ; et
- éventuellement enveloppement du moule rempli avec un emballage.

14. Procédé de stockage de pâtons frais prêts à l'emploi, comprenant les étapes de :
- fourniture d'un produit de pâte emballé selon l'une quelconque des revendications 1 à 11 ; et
- réfrigération du produit de pâte emballé, de préférence à une température supérieure à 0 et pouvant aller jusqu'à 10 °C ; plus préférablement supérieure à 0 et pouvant aller jusqu'à 8 °C ; de manière préférée entre toutes, supérieure à 0 et pouvant aller jusqu'à 4 °C ; et
- éventuellement stockage du produit de pâte emballé pouvant aller jusqu'à 14 jours.

15. Procédé de stockage de pâtons frais prêts à l'emploi selon la revendication 14, dans lequel le produit de pâte emballé n'est pas congelé en dessous de 0 °C.
